# EUROPEAN PATENT APPLICATION

(11) **EP 2 113 362 A1**
(43) Date of publication of application: **04.11.2009**
(21) Application number: 08155108.7
(22) Date of filing: 24.04.2008
(51) Int. Cl.: B29C 47/06, B29C 71/02, B29C 47/16, B29C 47/70

(54) **Coextrusion die and manifold system therefor**

(71) Applicant: Tonen Chemical Corporation, Tokyo 108-8005 (JP)
(72) Inventor: The designation of the inventor has not yet been filed
(74) Representative: Veldhuizen, Albert Dirk Willem

(57) **Abstract**

A coextrusion die (10) for producing a multilayer film or sheet of thermoplastic materials. The coextrusion die includes a die outlet (12) through which a layered melt stream of the thermoplastic materials is extruded as a multilayer film or sheet, a first die section for producing a core layer, the first die section having a flat manifold, the flat manifold having a feed entrance and a pressure manifold in communication with the slotted die outlet, a second die section for producing a first skin layer, the second die section having a cross flow manifold, the cross flow manifold having a flow path wherein a portion of a melt stream of the thermoplastic material traverses the second die section's length more than once (26,28), the cross flow manifold having a feed entrance (30) and a pressure manifold (32) in communication with the slotted die outlet, and a third die section for producing a second skin layer, the third die section having a cross flow manifold, the cross flow manifold having a flow path wherein a portion of a melt stream of the thermoplastic material traverses the third die section's length more than once, the cross flow manifold having a feed entrance and a pressure manifold in communication with the slotted die outlet.

## Description

### FIELD OF THE INVENTION

This disclosure relates generally to an extrusion apparatus for producing a film or sheet of thermoplastic material.

### BACKGROUND OF THE INVENTION

Coextrusion dies are used in manufacturing processes to make a variety of goods.
Some dies, for example, are used to form thin films, sheets or other elongated shapes of plastic material. Many advantages are achieved by the production of multiple layer constructions of thin films as this construction enables a combination of properties not available in a mono-layer structure. Originally, such products were prepared principally by laminating separately formed films or sheets together by adhesives, heat or pressure.

Techniques have been developed for melt laminating which involves joining two or more diverse materials (e.g., thermoplastic materials) from separate molten layers under pressure within a die to emerge as a single laminated material. Such processes make use of the laminar flow principle which enables two or more molten layers under proper operating conditions to join in a common flow channel without intermixing at the contacting interfaces. These multiple layer extrusion systems have come into use as a convenient way to provide for the formation of multiple layers of similar or dissimilar materials.

Various extrusion dies have been produced to extrude multiple layer films. One general configuration of device utilized a first die section which combined the various layers of materials. The combined materials were then flattened and extruded through a second die section. An example of this type of device is illustrated by U.S. Patent No. 5,316,703, incorporated by reference herein in its entirety. This type of device was limited in effectiveness because of the requirement in thin film production that the multi-layer sheet or web have uniform thickness across the width or transverse direction (TD) of the extruded sheet. As may be appreciated, if there are great differences in viscosity, temperature and flow rate between the melted resins that form the resin layers, it can be difficult to obtain multi-layer sheets of uniform thickness.

Multiple manifold die systems are designed with an individual flow channel or manifold for each layer and normally the layers are brought into contact just before the exit of the die. Because the layers are joined only near the final exit slot, materials with somewhat diverse rheological properties can be processed. The individual layers can be formed at the desired thickness before combining with the remaining layers and adjustments of the flow speed for each individual layer can be effected to maintain uniformity of flow between the various layers. This is necessary, since any tendency towards differences between flows at the junction point between layers can cause non-uniformity in the product.

A die assembly can be modular and is typically assembled from a plurality of parts and then set in a die station as an integral device. For example, a die assembly can comprise a first die part and a second die part, which together form the components that allow a fluid to enter the assembly and be properly emitted therefrom. The first die part includes a first lip and the second die part includes a second lip, these lips defining a feed gap therebetween that determines the thickness of the fluid film emitted therefrom.

Center feed extrusion dies are commonly used in today's plastics industry. A flow stream entering the manifold undergoes flow divergence, as a result of which there occurs a division of the stream into substreams that flow in generally opposite directions to both ends of the manifold. Pressure drop occurs as each substream flows from the centerline of the manifold to its respective manifold end.

Typically, center feed extrusion dies have a tear drop-shaped, flat manifold, which may in a form known as a coat hanger manifold, a fish tail manifold, or a T-type manifold. To overcome the pressure drop and produce a substantially equal flow volume of a stream across the stream width, this type of die may further include a flow pressure-compensating preland channel. Also known is a center feed extrusion die having a two stage, flow pressure-compensating, preland channel. This type of apparatus is exemplified in U.S. Patent No. 4,372,739 to Vetter et al. and U.S. Patent No. 5,256,052 to Cloeren.

A die assembly can have a fixed feed gap or a flexible feed gap. With a fixed feed gap, the lips are not movable relative to each other, so that the thickness of the feed gap will always be the same dimension. With a flexible feed gap, one lip is movable relative to the other lip so as to enable adjustment of the feed gap along the width of the assembly. A flexible feed gap is typically accomplished by assembling the first die part so that it contains a flexible web between its rear portion and its front portion (to which the first lip is attached), as well as means for moving the front portion in localized areas. Movement of the front portion results in the adjustment of the position of the lip relative to the other lip and, thus, the thickness of the feed gap in the relevant localized area.

In flexible feed gap operations, localized adjustments of the feed gap can usually be accomplished with conventional die assembly designs in order to accommodate a particular run. However, once initial adjustments are made (i.e., once the movable lip is moved from its original adjustment), returning the lip to a known position is not so easily done, if it is even possible. Also, without a clean die and specialized equipment, it is impossible to adjust a feed gap on an industry standard flex die to a known precision gap opening.

The production of certain specialty films, such as microporous polyolefin membranes have presented additional requirements in the design of coextrusion dies for their production. Microporous polyolefin membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous polyolefin membrane is used as a battery separator, particularly as a lithium ion battery separator, the membrane's performance significantly affects the properties, productivity and safety of the battery. Accordingly, the microporous polyolefin membrane should have suitably well-balanced permeability, mechanical properties, dimensional stability, shutdown properties, meltdown properties, etc. The term "well-balanced" means that the optimization of one of these characteristics does not result in a significant degradation in another.

As is known, it is desirable for the batteries to have a relatively low shutdown temperature and a relatively high meltdown temperature for improved battery safety, particularly for batteries exposed to high temperatures under operating conditions. Consistent dimensional properties, such as film thickness, are essential to high performing films. A separator with high mechanical strength is desirable for improved battery assembly and fabrication, and for improved durability. The optimization of material compositions, casting and stretching conditions, heat treatment conditions, etc. have been proposed to improve the properties of microporous polyolefin membranes.

In general, microporous polyolefin membranes consisting essentially of polyethylene (i.e., they contain polyethylene only with no significant presence of other species) have relatively low meltdown temperatures. Accordingly, proposals have been made to provide microporous polyolefin membranes made from mixed resins of polyethylene and polypropylene, and multi-layer, microporous polyolefin membranes having polyethylene layers and polypropylene layers in order to increase meltdown temperature. The use of these mixed resins and the production of multilayer films having layers of differing polyolefins can make the productions of films having consistent dimensional properties, such as film thickness, all the more difficult.

WO 2005/113657 discloses a microporous polyolefin membrane having conventional shutdown properties, meltdown properties, dimensional stability and high-temperature strength. The membrane is made using a polyolefin composition comprising (a) a polyethylene resin composition comprising lower molecular weight polyethylene and higher molecular weight polyethylene, and (b) polypropylene. This microporous polyolefin membrane is produced by the so-called "wet process".

WO 2004/089627 discloses a microporous polyolefin membrane made of polyethylene and polypropylene comprising two or more layers, the polypropylene content being more than 50% and 95% or less by mass in at least one surface layer, and the polyethylene content being 50 to 95% by mass in the entire membrane.

JP7-216118A discloses a battery separator formed from a porous film comprising polyethylene and polypropylene as indispensable components and having at least two microporous layers each with different polyethylene content. The polyethylene content is 0 to 20% by weight in one microporous layer, 21 to 60% by weight in the other microporous layer, and 2 to 40% by weight in the overall film. The battery separator has relatively high shutdown-starting temperature and mechanical strength.

JP U3048972 discloses an extrusion die design said to eliminate flow divergence of the molten polymer within the extrusion manifold. The proposed die design is provided with two manifolds to form two slit currents. The molten polymer is fed into a first inlet at an end of a first manifold and a second inlet at the end of a second manifold on the opposite side of the first inlet. Two slit currents flow together inside the die. It is theorized that due to the absence of flow divergence of the melt inside the manifold, it may be possible to achieve uniform flow distribution within the die. This is said to result in improved thickness uniformity in the transverse direction the film or the sheet.

Despite these advances in the art, there remains a need for coextrusion dies and manifold systems capable of producing microporous polyolefin membranes and other high quality multilayer films.

### SUMMARY OF THE INVENTION

Provided is a coextrusion die for producing a multilayer film or sheet of thermoplastic materials. The coextrusion die includes a die outlet through which a layered melt stream of the thermoplastic materials is extruded as a multilayer film or sheet, a first die section for producing a core layer, the first die section having a flat manifold, the flat manifold having a feed entrance and a pressure manifold in communication with the slotted die outlet, a second die section for producing a first skin layer, the second die section having a cross flow manifold, the cross flow manifold having a flow path wherein a portion of a melt stream of the thermoplastic material traverses the second die section's length more than once, the cross flow manifold having a feed entrance and a pressure manifold in communication with the slotted die outlet, and a third die section for producing a second skin layer, the third die section having a cross flow manifold, the cross flow manifold having a flow path wherein a portion of a melt stream of the thermoplastic material traverses the third die section's length more than once, the cross flow manifold having a feed entrance and a pressure manifold in communication with the slotted die outlet.

In another aspect, a process for producing a multilayer film or sheet of thermoplastic materials is also provided. The process includes the steps of combining a first polyolefin composition and a solvent to prepare a first polyolefin solution, combining a second polyolefin composition and a second solvent to prepare a second polyolefin solution, coextruding the first and second polyolefin solutions through a coextrusion die, the coextrusion die comprising (i) a die outlet through which a melt stream of the thermoplastic materials is extruded to form a multilayer extrudate, (ii) a first die section for producing a core layer of the extrudate, the first die section having a flat manifold, the flat manifold having a feed entrance and a pressure manifold in communication with the slotted die outlet, (iii) a second die section for producing a first skin layer of the extrudate, the second die section having a cross flow manifold, the cross flow manifold having a flow path wherein a portion of a melt stream of the thermoplastic material traverses the second die section's length more than once, the cross flow manifold having a feed entrance and a pressure manifold in communication with the slotted die outlet, (iv) and a third die section for producing a second skin layer of the extrudate, the third die section having a cross flow manifold, the cross flow manifold having a flow path wherein a portion of a melt stream of the thermoplastic material traverses the third die section's length more than once, the cross flow manifold having a feed entrance and a pressure manifold in communication with the slotted die outlet, to form an extrudate.

It has been found that the shape memory characteristics of a polyolefin can be a factor in maintaining uniform transverse direction film and sheet thickness as the film or sheet exits a coextrusion die. Shape memory effects have been observed in conventional extrusion and coextrusion of sheets and films, i.e., those extrudates from polymer melts containing at most a small amount of solvent. It was, therefore, surprising to observe a shape memory effect in polymer extrudates containing a significant amount of solvent, e.g., in the range of at least 10 wt.%, or at least 25 wt.%, or at least 50 wt.%, or at least 75 wt.%, based on the weight of the extrudate.

It has also been found that coextrusion die manifold design can influence the shape memory phenomena. As such, in an exemplary form disclosed herein, the cross flow manifold is provided with a flow path of a length sufficient to substantially eliminate the shape memory characteristics of the thermoplastic material.

In a still further exemplary form disclosed herein, the die outlet is a slotted die outlet which includes a first die lip and a second die lip, the first die lip including a flexible lip bar having actuatable means located along a length thereof.

In yet a further exemplary form disclosed herein, the actuatable means of the first die lip includes a plurality of individual lip bolts effective for varying the width of the slotted die outlet in a region adjacent a point of adjustment.

In yet a further exemplary form disclosed herein, a skin layer feedblock is provided for dividing a flow of skin layer thermoplastic material into a first flow and a second flow, the first flow feeding a feed entrance of the second die section for producing a first skin layer and the second flow feeding a feed entrance of the third die section for producing a second skin layer.

These and other advantages, features and attributes of the disclosed coextrusion dies and manifold systems and their advantageous applications and/or uses will be apparent from the detailed description that follows, particularly when read in conjunction with the figures appended hereto.

### BRIEF DESCRIPTION OF THE DRAWINGS

FIG. 1 is an end view of a coextrusion die for producing a multilayer film or sheet of thermoplastic materials, in accordance herewith;

FIG. 2 is a side view of a first die section taken along line 2-2 of FIG. 1, showing a coat hanger manifold for producing a core layer of a multilayer film or sheet of thermoplastic materials, in accordance herewith;

FIG. 3 is a perspective view of a first portion of a second die section taken along line 3-3 of FIG. 1, showing a cross flow manifold for producing a skin layer of a multilayer film or sheet of thermoplastic materials, in accordance herewith;

FIG. 4 is a perspective view of a second portion of a second die section taken along line 3-3 of FIG. 1, showing a cross flow manifold for producing a skin layer of a multilayer film or sheet of thermoplastic materials, in accordance herewith;

FIG. 5 is a side view of a coextrusion die for producing a multilayer film or sheet of thermoplastic materials showing a flexible lip bar having externally actuatable means, in accordance herewith; and

FIG. 6 is a schematic view of a coextrusion die for producing a multilayer film or sheet of thermoplastic materials showing the respective flow paths of the thermoplastic materials, in accordance herewith;

FIG. 7 is a perspective view of a coat hanger extrusion die showing the flow path of the thermoplastic material;

FIG. 8 is a perspective view of a cross flow extrusion die showing the flow path of the thermoplastic material;

FIG. 9 is a cross sectional representation of a two layer film;

FIG. 10 is a cross sectional representation of a three layer film; and

FIG. 11 is a cross sectional representation of a three layer film.

### DETAILED DESCRIPTION OF THE INVENTION

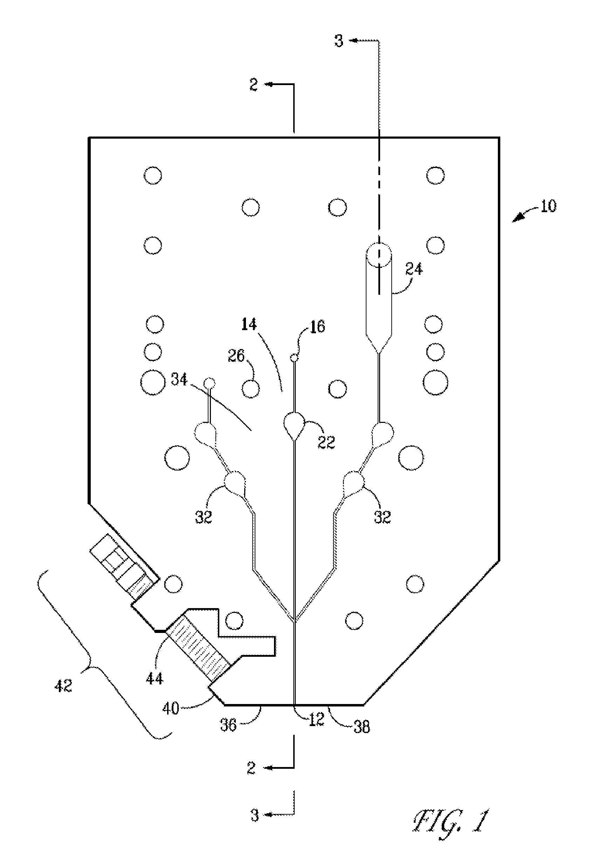

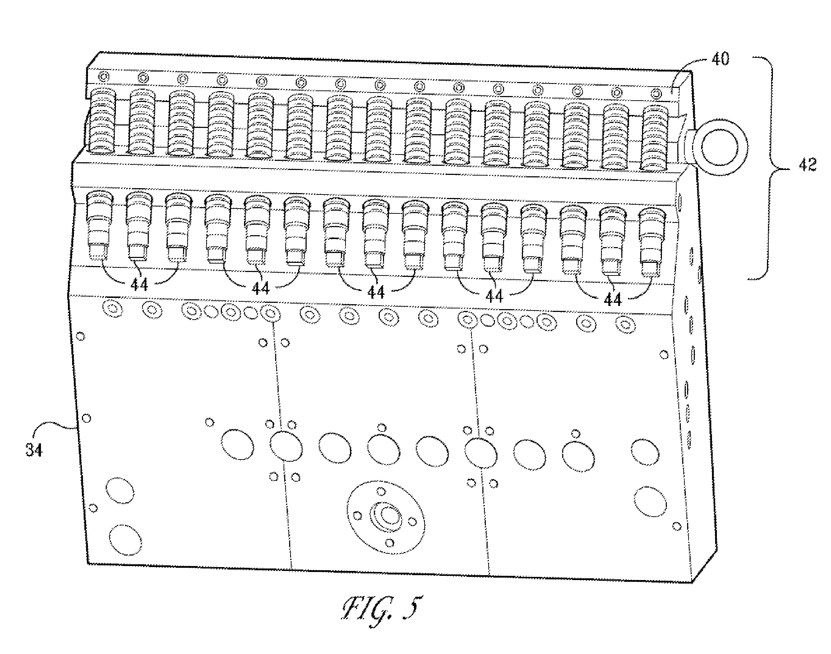

Reference is now made to FIGS. 1-11, wherein like numerals are used to designate like parts throughout.

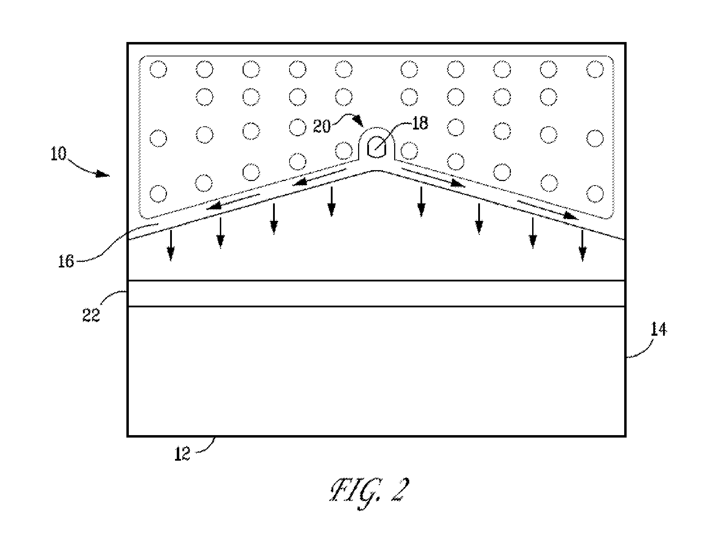

Referring now to FIGS. 1-5, a coextrusion die 10 for producing a multilayer film or sheet of thermoplastic materials, in accordance herewith, is shown. Coextrusion die 10 includes a die outlet 12, which may be a slotted die outlet, as shown, through which a melt stream of the thermoplastic materials may be extruded as a multilayer film or sheet (extrudate). Coextrusion die 10 also includes a first die section 14 for producing a core or intermediate layer. First die section 14 is provided with a flat manifold, which may be in the form of a coat hanger manifold 16, as shown, or a fish tail manifold, or a T-type manifold. As shown in detail by reference to FIG. 2, coat hanger manifold 16 has a feed entrance 18 at apex 20 and a pressure manifold 22 in communication with slotted die outlet 12.

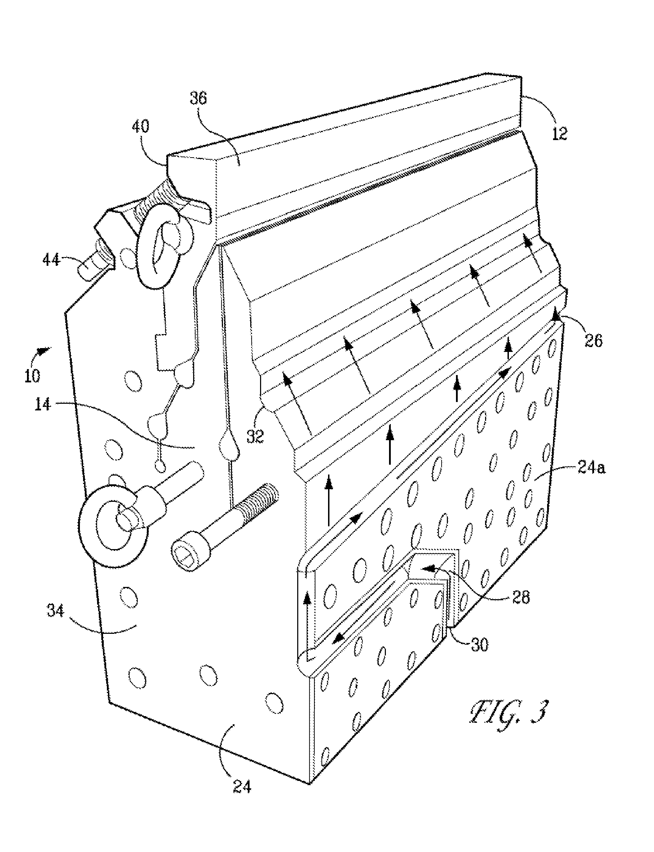

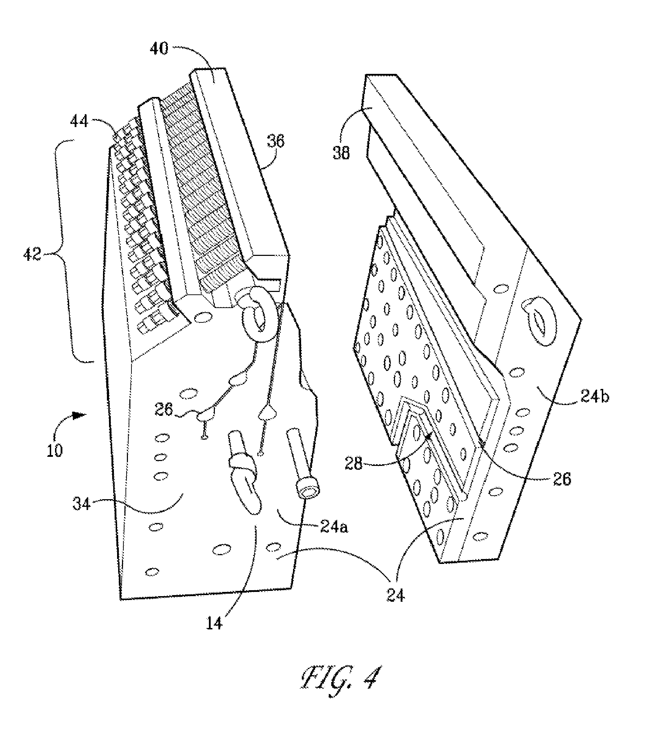

Coextrusion die 10 also includes a second die section 24 for producing a first skin layer. As shown in detail by reference to FIGS. 3 and 4, second die section 24 is provided with a cross flow manifold 26. As may be seen, cross flow manifold may be provided with a flow path 28 wherein a portion of a melt stream of the thermoplastic material traverses the length of second die section 24 more than once. Cross flow manifold 26 also is provided with a feed entrance 30 and a pressure manifold 32 in communication with said slotted die outlet 12.

When three-layer films or sheets are desired, a third die section 34 for producing a second skin layer may be provided. Third die section 34 can also be provided with a cross flow manifold 26. As with second die section 24, the cross flow manifold 26 of third die section 34 may have a flow path 28 wherein a portion of a melt stream of the thermoplastic material traverses the length of third die section 34 more than once. The cross flow manifold 26 of third die section 34 is provided with a feed entrance 30 and a pressure manifold 32 in communication with said slotted die outlet 12.

When forming multilayer microporous polyolefin membrane films and sheets from the polyolefins described hereinbelow, a characteristic of these materials is their inherent propensity for shape memory. As is known to those skilled in the art, shape-memory plastics have a thermoplastic phase and a "frozen" phase. The initial shape is "memorized" in the frozen phase, with the shape-memory effect permitting its recovery from whatever temporary shape the plastic has been formed into. As may be appreciated, a polymer chain has an ideal spatial configuration (Gaussian coil) in a melt state or in a solution without perturbation. When the polymer is deformed by an external force, e.g., shear flow, the polymer relaxes its shape returns to the ideal Gaussian coil by allowing itself to diffuse in the polymer axis direction. The relaxation time strongly depends on the number of entanglements, therefore, the higher the molecular weight of the polymer and the higher the polymer concentration of the solution is, the longer the relaxation time required.

The shape memory characteristics of a polyolefin can be a factor in maintaining uniform transverse direction film and sheet thickness as the film or sheet exits the coextrusion die. It has been found that manifold design can influence and correct for this phenomenon. As such, in one form, cross flow manifold 26 of second die section 24 and cross flow manifold 26 of third die section 34 each have a flow path of a length sufficient to substantially eliminate the shape memory characteristics of the thermoplastic material. In another form, where a bi-layer film or sheet is to be produced, cross flow manifold 26 of second die section 24 has a flow path of a length sufficient to substantially eliminate the shape memory characteristics of the thermoplastic material.

In another form, cross flow manifold 26 of second die section 24 and cross flow manifold 26 of third die section 34 each have a flow path wherein a portion of a melt stream of the thermoplastic material traverses the length of second die section 24 and the length of third die section 34, respectively, at least twice. In yet another form, where a bi-layer film or sheet is to be produced, cross flow manifold 26 of second die section 24 has a flow path wherein a portion of a melt stream of the thermoplastic material traverses said second die section's length at least twice.

As shown with particular reference to FIGS. 1, 4 and 5, slotted die outlet 12 of coextrusion die 10 may be provided with a first die lip 36 and a second die lip 38, first die lip 36 including a flexible lip bar 40 having externally actuatable means 42 located along a length thereof. As shown, externally actuatable means 42 includes a plurality of individual lip bolts 44, each lip bolt 44 effective for varying the width of slotted die outlet 12 in a region adjacent to a point of adjustment.

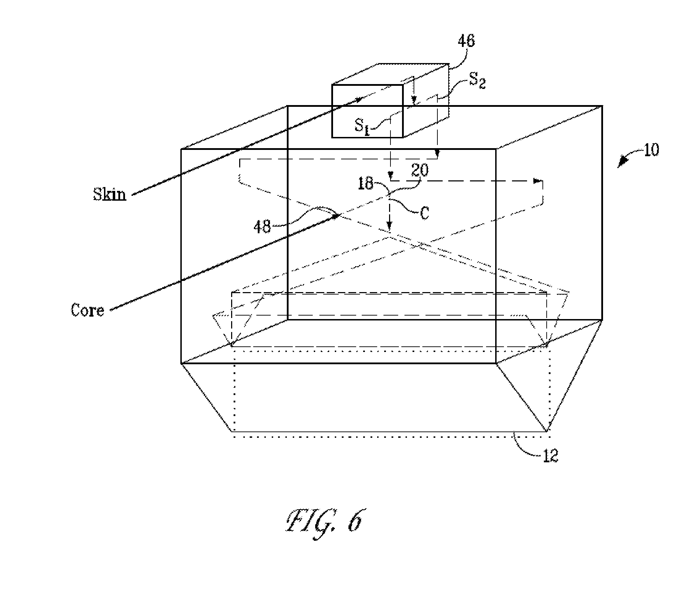

As shown with particular reference to FIG. 6, coextrusion die 10 can be provided with a skin layer feedblock 46 for dividing a flow of skin layer thermoplastic material into a first flow S1 and a second flow S2, the first flow S1 feeding feed entrance 30 of said second die section 24 for producing a first skin layer and the second flow S2 feeding feed entrance 30 of third die section 34 for producing a second skin layer.

In another form, wherein a bi-layer film or sheet is produced, coextrusion die 10 is provided with a skin layer feedblock (not shown) for feeding feed entrance 30 of second die section 24 for producing a first skin layer.

In one form, as shown with particular reference to FIG. 6, coextrusion die 10 can be provided with a core layer feed inlet 48 in fluid communication with feed entrance 18 at apex 20 of coat hanger manifold 16.

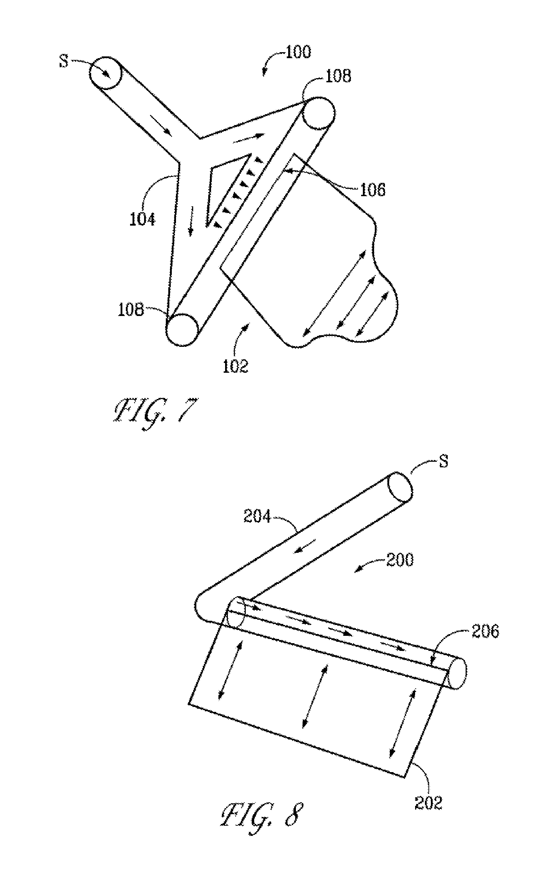

The coextrusion dies and manifold systems disclosed herein overcome a difficulty when coextruding a polyolefin solution through a die in a variety of processes, including a "wet" microporous polyolefin membrane film or sheet process. As may be seen by reference to FIG. 7, this difficulty stems from the fact that when a coat hanger manifold (CH) die 100 is used for the extrusion of a monolayer microporous polyolefin membrane film or sheet 102, shape-memory effects in the extrudate cause a thickness non-uniformity along the transverse direction of the extrudate. As may be appreciated, shape-memory effects in the extrudate tend to act in a direction perpendicular to the flow of the polyolefin solution S in the die manifold 104. Since, in coat hanger manifold die 100, the primary direction of flow in the manifold is toward the die lip 106, the shape-memory effect tends to occur in the transverse direction of the extrudate. This causes a redistribution of material in the extrudate toward the extrudate's center along the transverse direction.

Referring now to FIG. 8, in the case of monolayer extrusion dies, it has been discovered that this issue can be overcome through the use of a cross flow manifold (CF) die 200, where the polyolefin solution S is made to traverse the width of the die manifold 204 at least two times before polyolefin solution S approaches the die lip 206. As may be appreciated, this results in a significant amount of polyolefin solution S in the die manifold flowing in a direction parallel to die lip 206. Consequently, shape memory effects will occur primarily in the machine direction, resulting in a more uniform distribution of the extrudate in the transverse direction.

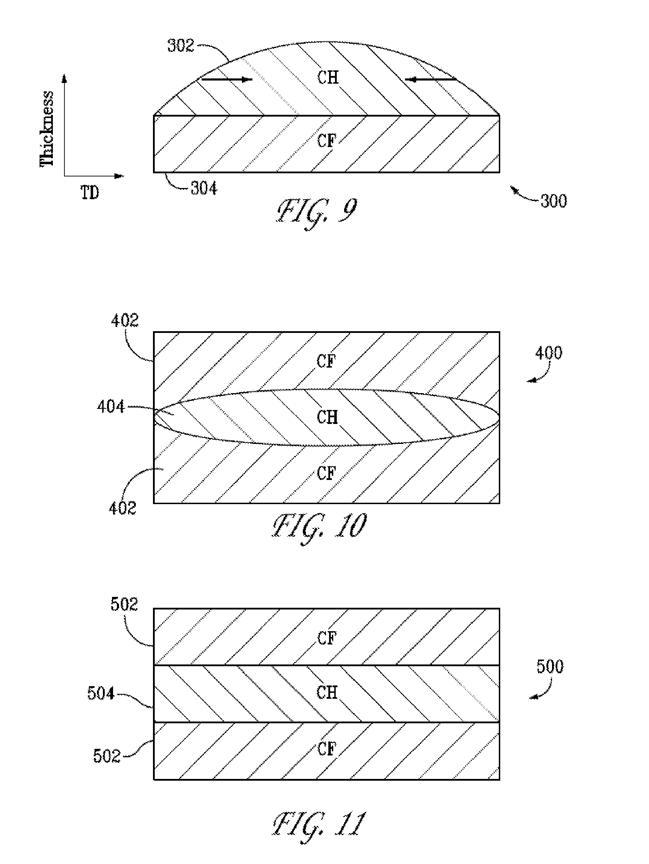

Experience suggests that the relative lack of transverse direction shape memory in a film or sheet made using a cross flow die would make it practical to produce a two layer coextruded film or sheet having one layer extruded through a cross flow manifold die and the second layer coextruded through a coat hanger manifold die. However, this has been found not to be the case, as may be seen from the cross-sectional representation of such an extrudate 300, depicted in FIG. 9. As shown, the intimate planar contact of the two layers 302 and 304 is not sufficient to overcome the shape memory effect in layer 302, the layer extruded from the coat hanger manifold die. Consequently, one interested in making a two layer coextruded film or sheet would be led to use a combination of cross flow manifold dies. However, the use of three cross flow manifold dies to make a coextruded three layer film or sheet would be very expensive and the dies difficult to manufacture due to their complexity.

Referring now to FIG. 10, the coextrusion dies and manifold systems disclosed herein are based on the discovery that a three layer extrudate 400, produced using cross flow dies for the skin layers 402 is believed to fix the position of the material within core layer 404 produced using a coat hanger manifold die, as a result of the large planar interfaces. This prevents much of the transverse direction thickness variation that would otherwise occur in layer 404 as a result of shape memory effects. This is unexpected since the results obtained in the case of the two layer film 300 of FIG. 9 would lead one skilled in the art to use a cross flow/cross flow/cross flow coextrusion die, rather than a cross flow/coat hanger/cross flow coextrusion die.

As depicted by FIG. 10, a small amount of core layer 404 thickness non-uniformity may still occur when a coat hanger manifold die is used for core layer 404 and cross flow manifold dies used for skin layers 402. Referring also to FIG. 7, it is believed that this is not the result of shape memory effects in the core layer 404, but rather the result of an increase in the apparent viscosity of the polyolefin solution S under shear conditions in die manifold 104, preventing sufficient polyolefin solution S from reaching the ends of the die channels 108 near the outside edges of the die 100. Since the apparent viscosity of the polyolefin solution S in the die channel is higher, the amount of polyolefin solution S made available near the transverse edges of the die lip 106 is less than that which would be predicted based on the viscosity measured during rheological testing. The insufficiency of core-layer material available near the ends of the die lip 106 is believed to result in the core layer thickness non-uniformity illustrated in FIG. 10.

To address this issue, in one form, the pressure manifold of the core layer coat hanger manifold die 100 may be enlarged near its transverse ends 108 from the cross sectional area that exists at its midpoint. Sufficient core layer polyolefin solution S can then be made available near the transverse ends of the die lip 106 to significantly reduce the amount of transverse thickness variation in the core layer of a three layer coextruded film or sheet. As shown in FIG. 11, a three-layer coextruded microporous polyolefin membrane film or sheet 500, produced using a die having this modified coat hanger manifold structure, with an enlarged cross section near the transverse ends of the pressure manifold, can produce a film or sheet 500 having a pair of skin layers 502 and a core layer 504 of uniform cross section. As indicated above, this coextrusion die is less complicated and less expensive than a coextrusion die having a cross flow/cross flow/cross flow structure and is compatible with a wider range of resins than a conventional cross flow/coat hanger/cross flow structure, resulting in greater thickness uniformity in the transverse direction for polyolefin solutions exhibiting a relatively large difference in viscosity under test conditions compared to their viscosities in the die under process conditions.

As indicated, the coextrusion dies and manifold systems disclosed herein are useful in forming multilayer microporous polyolefin membrane films and sheets. These films and sheets find particular utility in the critical field of battery separators. In one form, the multi-layer, microporous polyolefin membrane comprises two layers. The first layer (e.g., the skin, top or upper layer of the membrane) comprises a first microporous layer material, and the second layer (e.g., the bottom or lower or core layer of the membrane) comprises a second microporous layer material. For example, the membrane can have a planar top layer when viewed from above on an axis approximately perpendicular to the transverse and longitudinal (machine) directions of the membrane, with the bottom planar layer hidden from view by the top layer.

In another form, the multi-layer, microporous polyolefin membrane comprises three or more layers, wherein the outer layers (also called the "surface" or "skin" layers) comprise the first microporous layer material and at least one core or intermediate layer comprises the second microporous layer material. In a related form, where the multi-layer, microporous polyolefin membrane comprises two layers, the first layer consists essentially of the first microporous layer material and the second layer consists essentially of the second microporous layer material. In a related form where the multi-layer, microporous polyolefin membrane comprises three or more layers, the outer layers consist essentially of the first microporous layer material and at least one intermediate layer consists essentially of (or consists of) the second microporous layer material.

Starting materials having utility in the production of the afore-mentioned films and sheets will now be described. As will be appreciated by those skilled in the art, the selection of a starting material is not critical as long as an extrusion die and manifold system employing cross flow manifold principles can be applied. In one form, the first and second microporous layer materials contain polyethylene. In one form, the first microporous layer material contains a first polyethylene ("PE-1") having an Mw value of less than about 1 x 10⁶ or a second polyethylene ("UHMWPE-1") having an Mw value of at least about 1 x 10⁶. In one form, the first microporous layer material can contain a first polypropylene ("PP-1"). In one form, the first microporous layer material comprises one of (i) a polyethylene (PE), (ii) an ultra high molecular weight polyethylene (UHMWPE), (iii) PE-1 and PP-1, or (iv) PE-1, UHMWPE-1, and PP-1.

In one form of the above (ii) and (iv), UHMWPE-1 can preferably have an Mw in the range of from about 1 x 10⁶ to about 15 x 10⁶ or from about 1 x 10⁶ to about 5 x 10⁶ or from about 1 x 10⁶ to about 3 x 10⁶,and preferably contain no more than about 7 wt.%, on the basis of total amount of PE-1 and UHMWPE-1 in order to obtain a microporous layer having a hybrid structure defined in the later section, and can be at least one of homopolymer or copolymer. In one form of the above (iii) and (iv), PP-1 can be at least one of a homopolymer or copolymer, or can preferably contain no more than about 25 wt.%, more preferably about 2 wt.% to about 15 wt.%, most preferably about 3 wt.% to about 10 wt.%, on the basis of total amount of the first layer microporous material. In one form, the Mw of polyolefin in the first microporous layer material can have about 1 x 10⁶ or less, or in the range of from about 1 x 10⁵ to about 1 x 10⁶ or from about 2 x 10⁵ to about 1 x 10⁶ in order to obtain a microporous layer having a hybrid structure defined in the later section. In one form, PE-1 can preferably have an Mw ranging from about 1 x 10⁴ to about 5 x 10⁵, or from about 2 x 10⁵ to about 4 x 10⁵, and can be one or more of a high-density polyethylene, a medium-density polyethylene, a branched low-density polyethylene, or a linear low-density polyethylene, and can be at least one of a homopolymer or copolymer.

In one form, the first microporous layer material (the first layer of the two-layer, microporous polyolefin membrane and the first and third layers of a three-layer microporous polyolefin membrane) has a hybrid structure, which is characterized by a pore size distribution exhibiting relatively dense domains having a main peak in a range of 0.01 µm to 0.08 µm and relatively coarse domains exhibiting at least one sub-peak in a range of more than 0.08 µm to 1.5 µm or less in the pore size distribution curve. The ratio of the pore volume of the dense domains (calculated from the main peak) to the pore volume of the coarse domains (calculated from the sub-peak) is not critical, and can range, e.g., from about 0.5 to about 49.

In one form, the second microporous layer material comprises one of: (i) a fourth polyethylene having an Mw of at least about 1 x 10⁶, (UHMWPE-2), (ii) a third polyethylene having an Mw that is less than 1 x 10⁶ and UHMWPE-2 and the fourth polyethylene, wherein the fourth polyethylene is present in an amount of at least about 8% by mass based on the combined mass of the third and fourth polyethylene; (iii) UHMWPE-2 and PP-2, or (iv) PE-2, UHMWPE-2, and PP-2. In one form of the above (ii), (iii) and (iv), UHMWPE-2 can contain at least about 8 wt.%, or at least about 20 wt.%, or at least about 25 wt.%, based on the total amount of UHMWPE-2, PE-2 and PP-2 in order to produce a relatively strong multi-layer, microporous polyolefin membrane. In one form of the above (iii) and (iv), PP-2 can be at least one of a homopolymer or copolymer, and can contain 25 wt.% or less, or in the range of from about 2% to about 15%, or in the range of from about 3% to about 10%, based on the total amount of the second microporous layer material. In one form, preferable PE-2 can be the same as PE-1, but can be selected independently. In one form, preferable UHMWPE-2 can be the same as UHMWPE-1, but can be selected independently.

In addition to the first, second, third, and fourth polyethylenes and the first and second polypropylenes, each of the first and second layer materials can optionally contain one or more additional polyolefins, identified as the seventh polyolefin, which can be ,e.g., one or more of polybutene-1, polypentene-1, poly-4-methylpentene-1, polyhexene-1, polyoctene-1, polyvinyl acetate, polymethyl methacrylate, polystyrene and an ethylene α-olefin copolymer (except for an ethylene-propylene copolymer) and can have an Mw in the range of about 1 x 10⁴ to about 4 x 10⁶. In addition to or besides the seventh polyolefin, the first and second microporous layer materials can further comprise a polyethylene wax, e.g., one having an Mw in the range of about 1 x 10³ to about 1 x 10⁴.

In one form, a process for producing a two-layer microporous polyolefin membrane is provided wherein a coextrusion die and manifold system of the type disclosed herein is employed. In another form, the microporous polyolefin membrane has at least three layers and is produced through the use of a coextrusion die and manifold system of the type shown in FIGS. 1-6. For the sake of brevity, the production of the microporous polyolefin membrane will be mainly described in terms of two-layer and three-layer membrane.

In one form, a three-layer microporous polyolefin membrane comprises first and third microporous layers constituting the outer layers of the microporous polyolefin membrane and a second (core) layer situated between (and optionally in planar contact with) the first and third layers. In another form, the first and third layers are produced from a first polyolefin solution and the second (core) layer is produced from a second polyolefin solution.

In one form, a method for producing the multi-layer, microporous polyolefin membrane is provided. The method comprises the steps of (1) combining (e.g., by melt-blending) a first polyolefin composition and a first solvent to prepare a first polyolefin solution, (2) combining a second polyolefin composition and a second solvent to prepare a second polyolefin solution (the first and second solvents can be referred to as "membrane-forming" solvents), (3) coextruding the first and second polyolefin solutions through a die of the type disclosed herein to form an extrudate, (4) cooling the extrudate to form a multi-layer, gel-like sheet (cooled extrudate), (5) removing at least a portion of the membrane-forming solvents from the multi-layer, gel-like sheet to form a solvent-removed gel-like sheet, and (6) drying the solvent-removed gel-like sheet in order to form the multi-layer, microporous polyolefin membrane. An optional stretching step (7), and an optional hot solvent treatment step (8), etc. can be conducted between steps (4) and (5), if desired. After step (6), an optional step (9) of stretching a multi-layer, microporous membrane, an optional heat treatment step (10), an optional cross-linking step with ionizing radiations (11), and an optional hydrophilic treatment step (12), etc., can be conducted if desired. The order of the optional steps is not critical.

The first polyolefin composition comprises polyolefin resins as described above that can be combined, e.g., by dry mixing or melt blending with an appropriate membrane-forming solvent to produce the first polyolefin solution. Optionally, the first polyolefin solution can contain various additives such as one or more antioxidant, fine silicate powder (pore-forming material), etc., provided these are used in a concentration range that does not significantly degrade the desired properties of the multi-layer, microporous polyolefin membrane.

The first membrane-forming solvent is preferably a solvent that is liquid at room temperature. While not wishing to be bound by any theory or model, it is believed that the use of a liquid solvent to form the first polyolefin solution makes it possible to conduct stretching of the gel-like sheet at a relatively high stretching magnification. In one form, the first membrane-forming solvent can be at least one of aliphatic, alicyclic or aromatic hydrocarbons such as nonane, decane, decalin, p-xylene, undecane, dodecane, liquid paraffin, etc.; mineral oil distillates having boiling points comparable to those of the above hydrocarbons; and phthalates liquid at room temperature such as dibutyl phthalate, dioctyl phthalate, etc. In one form where it is desired to obtain a multi-layer, gel-like sheet having a stable liquid solvent content, non-volatile liquid solvents such as liquid paraffin can be used, either alone or in combination with other solvents. Optionally, a solvent which is miscible with polyethylene in a melt blended state but solid at room temperature can be used, either alone or in combination with a liquid solvent. Such solid solvent can include, e.g., stearyl alcohol, ceryl alcohol, paraffin waxes, etc.

The viscosity of the liquid solvent is not a critical parameter. For example, the viscosity of the liquid solvent can range from about 30 cSt to about 500 cSt, or from about 30 cSt to about 200 cSt, at 25°C. Although it is not a critical parameter, when the viscosity at 25°C is less than about 30 cSt, it can be more difficult to prevent foaming the polyolefin solution, which can lead to difficulty in blending. On the other hand, when the viscosity is greater than about 500 cSt, it can be more difficult to remove the liquid solvent from the multi-layer microporous polyolefin membrane.

In one form, the resins, etc., used to produce to the first polyolefin composition are melt-blended in, e.g., a double screw extruder or mixer. For example, a conventional extruder (or mixer or mixer-extruder) such as a double-screw extruder can be used to combine the resins, etc., to form the first polyolefin composition. The membrane-forming solvent can be added to the polyolefin composition (or alternatively to the resins used to produce the polyolefin composition) at any convenient point in the process. For example, in one form where the first polyolefin composition and the first membrane-forming solvent are melt-blended, the solvent can be added to the polyolefin composition (or its components) at any of (i) before starting melt-blending, (ii) during melt blending of the first polyolefin composition, or (iii) after melt-blending, e.g., by supplying the first membrane-forming solvent to the melt-blended or partially melt-blended polyolefin composition in a second extruder or extruder zone located downstream of the extruder zone used to melt-blend the polyolefin composition.

When melt-blending is used, the melt-blending temperature is not critical. For example, the melt-blending temperature of the first polyolefin solution can range from about 10°C higher than the melting point Tm₁ of the polyethylene in the first resin to about 120°C higher than Tm₁. For brevity, such a range can be represented as Tm₁ + 10°C to Tm₁ + 120°C. In a form where the polyethylene in the first resin has a melting point of about 130°C to about 140°C, the melt-blending temperature can range from about 140°C to about 250°C, or from about 170°C to about 240°C.

When an extruder such as a double-screw extruder is used for melt-blending, the screw parameters are not critical. For example, the screw can be characterized by a ratio L/D of the screw length L to the screw diameter D in the double-screw extruder, which can range, for example, from about 20 to about 100 or from about 35 to about 70. Although this parameter is not critical, when L/D is less than about 20, melt-blending can be more difficult, and when L/D is more than about 100, faster extruder speeds might be needed to prevent excessive residence time of the polyolefin solution in the double-screw extruder, which can lead to undesirable molecular weight degradation. Although it is not a critical parameter, the cylinder (or bore) of the double-screw extruder can have an inner diameter of in the range of about 40 mm to about 100 mm, for example.

The amount of the first polyolefin composition in the first polyolefin solution is not critical. In one form, the amount of first polyolefin composition in the first polyolefin solution can range from about 1 wt.% to about 75 wt.%, based on the weight of the polyolefin solution, for example from about 20 wt.% to about 70 wt.%. The balance of the first polyolefin solution can be solvent. The second polyolefin solution can be prepared by the same methods used to prepare the first polyolefin solution. For example, the second polyolefin solution can be prepared by melt-blending a second polyolefin composition with a second membrane-forming solvent.

Although it is not a critical parameter, the melt-blending conditions for the second polyolefin solution can differ from the conditions described for producing the first polyolefin composition in that the melt-blending temperature of the second polyolefin solution can range from about the melting point Tm₂ of the polyethylene in the second resin + 10°C to Tm₂ + 120°C.

The amount of the second polyolefin composition in the second polyolefin solution is not critical. In one form, the amount of second polyolefin composition in the second polyolefin solution can range from about 1 wt.% to about 75 wt.%, based on the weight of the second polyolefin solution, for example from about 20 wt.% to about 70 wt.%. The balance of the second polyolefin solution can be solvent.

The first and second polyolefin solutions are co-extruded using a coextrusion die of the type disclosed herein, wherein a planar surface of a first extrudate layer formed from the first polyolefin solution is in contact with a planar surface of a second extrudate layer formed from the second polyolefin solution. A planar surface of the extrudate can be defined by a first vector in the machine direction (MD) of the extrudate and a second vector in the transverse direction (TD) of the extrudate.

In another form, the first extruder containing the first polyolefin solution is connected to a second die section for producing a first skin layer and a third die section for producing a second skin layer, and a second extruder containing the second polyolefin solution is connected to a first die section for producing a core layer. The resulting layered extrudate can be co-extruded to form a three-layer extrudate comprising a first and a third layer constituting skin or surface layers produced from the first polyolefin solution; and a second layer constituting a core or intermediate layer of the extrudate situated between and in planar contact with both surface layers, where the second layer is produced from the second polyolefin solution.

The die gap is generally not critical. For example, the multi-layer-sheet-forming die of the type disclosed herein can have a die gap of about 0.1 mm to about 5 mm. Die temperature and extruding speed are also non-critical parameters. For example, the die can be heated to a die temperature ranging from about 140°C to about 250°C during extrusion. The extruding speed can range, for example, from about 0.2m/minute to about 15 m/minute. The thickness of the layers of the layered extrudate can be independently selected. For example, the gel like sheet can have relatively thick skin or surface layers compared to the thickness of an intermediate layer of the layered extrudate.

While the extrusion has been described in terms of producing two and three-layer extrudates, the extrusion step is not limited thereto. For example, a plurality of dies and/or die assemblies can be used to produce multi-layer extrudates having four or more layers using the principles of the coextrusion dies and methods disclosed herein.

The multi-layer extrudate can be formed into a multi-layer, gel-like sheet by cooling, for example. Cooling rate and cooling temperature are not particularly critical. For example, the multi-layer, gel-like sheet can be cooled at a cooling rate of at least about 50°C/minute until the temperature of the multi-layer, gel-like sheet (the cooling temperature) is approximately equal to the multi-layer, gel-like sheet's gelatin temperature (or lower). In one form, the extrudate is cooled to a temperature of about 25°C or lower in order to form the multi-layer gel-like sheet.

In one form, the first and second membrane-forming solvents are removed (or displaced) from the multi-layer gel-like sheet in order to form a solvent-removed gel-like sheet. A displacing (or "washing") solvent can be used to remove (wash away, or displace) the first and second membrane-forming solvents. The choice of washing solvent is not critical provided it is capable of dissolving or displacing at least a portion of the first and/or second membrane-forming solvent. Suitable washing solvents include, for instance, one or more of volatile solvents such as saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, C₆F_{14,} C₇F₁₆, etc.; cyclic hydrofluorocarbons such as C₅H₃F₇, etc.; hydrofluoroethers such as C₄F₉OCH₃, C₄F₉OC₂H₅, etc.; and perfluoroethers such as C₄F₉OCF₃, C₄F₉O C₂H₅, etc.

The method for removing the membrane-forming solvent is not critical, and any method capable of removing a significant amount of solvent can be used, including conventional solvent-removal methods. For example, the multi-layer, gel-like sheet can be washed by immersing the sheet in the washing solvent and/or showering the sheet with the washing solvent. The amount of washing solvent used is not critical, and will generally depend on the method selected for removal of the membrane-forming solvent. In one form, the membrane-forming solvent is removed from the gel-like sheet (e.g., by washing) until the amount of the remaining membrane-forming solvent in the multi-layer gel-like sheet becomes less than 1 wt.%, based on the weight of the gel-like sheet.

In one form, the solvent-removed multi-layer, gel-like sheet obtained by removing the membrane-forming solvent is dried in order to remove the washing solvent. Any method capable of removing the washing solvent can be used, including conventional methods such as heat-drying, wind-drying (moving air), etc. The temperature of the gel-like sheet during drying (i.e., drying temperature) is not critical. For example, the drying temperature can be equal to or lower than the crystal dispersion temperature Tcd. Tcd is the lower of the crystal dispersion temperature Tcd₁ of the polyethylene in the first resin and the crystal dispersion temperature Tcd₂ of the polyethylene in the second resin. For example, the drying temperature can be at least 5°C below the crystal dispersion temperature Tcd. The crystal dispersion temperature of the polyethylene in the first and second resins can be determined by measuring the temperature characteristics of the kinetic viscoelasticity of the polyethylene according to ASTM D 4065. In one form, the polyethylene in at least one of the first or second resins has a crystal dispersion temperature in the range of about 90°C to about100°C.

Although it is not critical, drying can be conducted until the amount of remaining washing solvent is about 5 wt.% or less on a dry basis, i.e., based on the weight of the dry multi-layer, microporous polyolefin membrane. In another form, drying is conducted until the amount of remaining washing solvent is about 3 wt.% or less on a dry basis.

Prior to the step for removing the membrane-forming solvents, the multi-layer, gel-like sheet can be stretched in order to obtain a stretched, multi-layer, gel-like sheet.

Neither the choice of stretching method nor the degree of stretching magnification is particularly critical. In one form, the stretching can be accomplished by one or more of tenter-stretching, roller-stretching, or inflation stretching (e.g., with air). Although the choice is not critical, the stretching can be conducted monoaxially (i.e., in either the machine or transverse direction) or biaxially (both the machine and transverse direction). In the case of biaxial stretching (also called biaxial orientation), the stretching can be simultaneous biaxial stretching, sequential stretching along one planar axis and then the other (e.g., first in the transverse direction and then in the machine direction), or multi-stage stretching (for instance, a combination of the simultaneous biaxial stretching and the sequential stretching).

The stretching magnification is not critical. In a form where monoaxial stretching is used, the linear stretching magnification can be, e.g., about 2 fold or more, or about 3 to about 30 fold. In a form where biaxial stretching is used, the linear stretching magnification can be, e.g., about 3 fold or more in any lateral direction. In another form, the linear magnification resulting from stretching is at least about 9 fold, or at least about 16 fold, or at least about 25 fold in area magnification.

The temperature of the multi-layer, gel-like sheet during stretching (namely the stretching temperature) is not critical. In one form, the temperature of the gel-like sheet during stretching can be about (Tm + 10°C) or lower, or optionally in a range that is higher than Tcd but lower than Tm, wherein Tm is the lesser of the melting point Tm₁ of the polyethylene in the first resin and the melting point Tm₂ of the polyethylene in the second resin.

The stretching when used generally makes it easier to produce a relatively high-mechanical strength multi-layer, microporous polyolefin membrane with a relatively large pore size. Such multi-layer, microporous membranes are believed to be particularly suitable for use as battery separators.

Optionally, stretching can be conducted in the presence of a temperature gradient in a thickness direction (i.e., a direction approximately perpendicular to the planar surface of the multi-layer, microporous polyolefin membrane) as described in JP 3,347,854 B2. In this case, it can be easier to produce a multi-layer, microporous polyolefin membrane with improved mechanical strength.

Although it is not required, the multi-layer, gel-like sheet can be treated with a hot solvent. When used, it is believed that the hot solvent treatment provides the fibrils (such as those formed by stretching the multi-layer gel-like sheet) with a relatively thick leaf-vein-like structure. The details of this method are described in WO 2000/20493.

In one form, the dried multi-layer, microporous membrane can be stretched, at least monoaxially. The stretching method selected is not critical, and conventional stretching methods can be used such as by a tenter method, etc. While it is not critical, the membrane can be heated during stretching. W hen the multi-layer gel-like sheet has been stretched as described above the stretching of the dry multi-layer, microporous polyolefin membrane can be called dry-stretching, re-stretching, or dry-orientation.

The temperature of the dry multi-layer, microporous membrane during stretching (the "dry stretching temperature") is not critical. In one form, the dry stretching temperature is approximately equal to the melting point Tm or lower, for example in the range of from about the crystal dispersion temperature Tcd to the about the melting point Tm. In one form, the dry stretching temperature ranges from about 90°C to about 135°C, or from about 95°C to about 1 30°C. When dry-stretching is used, the stretching magnification is not critical.

In one form, the dried multi-layer, microporous membrane can be heat-treated. In one form, the heat treatment comprises heat-setting and/or annealing. When heat-setting is used, it can be conducted using conventional methods such as tenter methods and/or roller methods. Although it is not critical, the temperature of the dried multi-layer, microporous polyolefin membrane during heat-setting (i.e., the "heat-setting temperature") can range from the Tcd to about the Tm.

Annealing differs from heat-setting in that it is a heat treatment with no load applied to the multi-layer, microporous polyolefin membrane. The choice of annealing method is not critical, and it can be conducted, for example, by using a heating chamber with a belt conveyer or an air-floating-type heating chamber. Alternatively, the annealing can be conducted after the heat-setting with the tenter clips slackened. The temperature of the multi-layer, microporous polyolefin membrane during annealing can range from about the melting point Tm or lower, or in a range from about 60°C to (Tm - 10°C), or from about 60°C to (Tm - 5°C).

In one form, the multi-layer, microporous polyolefin membrane can be crosslinked (e.g., by ionizing radiation rays such as a-rays, (3-rays, 7-rays, electron beams, etc.)) or can be subjected to a hydrophilic treatment (i.e., a treatment which makes the multi-layer, microporous polyolefin membrane more hydrophilic (e.g., a monomer-grafting treatment, a surfactant treatment, a corona-discharging treatment, etc.)).

The invention is further illustrated but not limited by the following embodiments:
1. A coextrusion die for producing a multilayer film or sheet of thermoplastic materials, comprising:
   (a) a die outlet through which a layered melt stream of the thermoplastic materials is extruded as a multilayer film or sheet,
   (b) a first die section for producing a core layer, said first die section having a flat manifold, said flat manifold having a feed entrance and a pressure manifold in communication with said slotted die outlet;
   (c) a second die section for producing a first skin layer, said second die section having a cross flow manifold, said cross flow manifold having a flow path wherein a portion of a melt stream of the thermoplastic material traverses said second die section's length more than once, said cross flow manifold having a feed entrance and a pressure manifold in communication with said slotted die outlet; and
   (d) a third die section for producing a second skin layer, said third die section having a cross flow manifold, said cross flow manifold having a flow path wherein a portion of a melt stream of the thermoplastic material traverses said third die section's length more than once, said cross flow manifold having a feed entrance and a pressure manifold in communication with said slotted die outlet.
2. The coextrusion die of embodiment 1, wherein said flat manifold of said first die section is a coat hanger manifold, a fish tail manifold, or a T-type manifold.
3. The coextrusion die of any preceding embodiment, wherein said flat manifold is a coat hanger manifold, wherein said feed entrance is positioned at an apex thereof.
4. The coextrusion die of any preceding embodiment, wherein said pressure manifold of said first die section has a midpoint having a first cross sectional area and transverse ends having a second cross sectional area, said second cross sectional area greater than said first cross sectional area of said pressure manifold.
5. The coextrusion die of any preceding embodiment, wherein said die outlet is a slotted die outlet which comprises a first die lip and a second die lip, said first die lip comprising a flexible lip bar having actuatable means located along a length thereof.
6. The coextrusion die of embodiment 5, wherein said actuatable means comprises a plurality of individual lip bolts, each of said lip bolts effective for varying the width of said slotted die outlet.
7. The coextrusion die of any preceding embodiment, further comprising a skin layer feedblock for dividing a flow of skin layer thermoplastic material into a first flow and a second flow, the first flow feeding said feed entrance of said second die section for producing a first skin layer and the second flow feeding said feed entrance of said third die section for producing a second skin layer.
8. The coextrusion die of any preceding embodiment, wherein said cross flow manifold of said second die section and said cross flow manifold of said third die section each have a flow path wherein a portion of a melt stream of the thermoplastic material traverses said second die section's length and said third die section's length, respectively, at least twice.
9. The coextrusion die of any preceding embodiment, wherein said cross flow manifold of said second die section and said cross flow manifold of said third die section each have a flow path wherein a portion of a melt stream of the thermoplastic material traverses said second die section's length and said third die section's length, respectively, at least 2.5 times.
10. The coextrusion die of any preceding embodiment, wherein said cross flow manifold of said second die section and said cross flow manifold of said third die section each have a flow path of a length sufficient to substantially eliminate the shape memory characteristics of the thermoplastic material.
11. A process for making a multilayer film or sheet of thermoplastic materials, comprising the following steps:
   (a) combining a first polyolefin composition and a solvent to prepare a first polyolefin solution,
   (b) combining a second polyolefin composition and a second solvent to prepare a second polyolefin solution,
   (c) coextruding the first and second polyolefin solutions through a coextrusion die, the coextrusion die comprising (i) a die outlet through which a melt stream of the thermoplastic materials is extruded to form an extrudate, (ii) a first die section for producing a core layer of the extrudate, the first die section having a flat manifold, the flat manifold having a feed entrance and a pressure manifold in communication with the slotted die outlet; (iii) a second die section for producing a first skin layer of the extrudate, the second die section having a cross flow manifold, the cross flow manifold having a flow path wherein a portion of a melt stream of the thermoplastic material traverses the second die section's length more than once, the cross flow manifold having a feed entrance and a pressure manifold in communication with the slotted die outlet; and (iv) a third die section for producing a second skin layer of the extrudate, the third die section having a cross flow manifold, the cross flow manifold having a flow path wherein a portion of a melt stream of the thermoplastic material traverses the third die section's length at least twice, the cross flow manifold having a feed entrance and a pressure manifold in communication with the slotted die outlet, to form an extrudate.
12. The process of embodiment 11, wherein the flat manifold of the first die section is a coat hanger manifold, a fish tail manifold, or a T-type manifold.
13. The process of embodiments 11 or 12, wherein the flat manifold is a coat hanger manifold, wherein the feed entrance is positioned at an apex thereof.
14. The process of any of embodiments 11 through 13, wherein the pressure manifold of the first die section has a midpoint having a first cross sectional area and transverse ends having a second cross sectional area, said second cross sectional area greater than said first cross sectional area of said pressure manifold.
15. The process of any of embodiments 11 through 14, wherein the die outlet of the coextrusion die is a slotted die outlet which includes a first die lip and a second die lip, the first die lip comprising a flexible lip bar having actuatable means located along a length thereof.
16. The process of embodiment 15, wherein the actuatable means of the slotted die outlet of the coextrusion die include a plurality of individual lip bolts, each of the lip bolts effective for varying the width of the slotted die outlet.
17. The process of any of embodiments 11 through 16, wherein the coextrusion die further includes a skin layer feedblock for dividing a flow of skin layer thermoplastic material into a first flow and a second flow, the first flow feeding the feed entrance of the second die section for producing a first skin layer and the second flow feeding the feed entrance of the third die section for producing a second skin layer.
18. The process of any of embodiments 11 through 17, wherein the cross flow manifold of the second die section and the cross flow manifold of the third die section each have a flow path wherein a portion of a melt stream of the thermoplastic material traverses the second die section's length and the third die section's length, respectively, at least twice.
19. The process any of embodiments 11 through 18, wherein the cross flow manifold of the second die section and the cross flow manifold of the third die section each have a flow path wherein a portion of a melt stream of the thermoplastic material traverses the second die section's length and the third die section's length, respectively, at least 2.5 times.
20. The process of any of embodiments 11 through 19, wherein the cross flow manifold of the second die section and the cross flow manifold of the third die section each have a flow path of a length sufficient to substantially eliminate the shape memory characteristics of the thermoplastic material.
21. The process of any of embodiments 11 through 20, further comprising the steps of:
   (d) cooling the extrudate to form a cooled extrudate;
   (e) removing the solvent from the cooled extrudate to form a solvent-removed cooled extrudate; and
   (f) drying the solvent-removed cooled extrudate to form the multi-layer, microporous membrane.
22. The process of embodiment 21, further comprising the step of:
   (g) stretching the cooled extrudate and/or the multi-layer, microporous membrane.

All patents, test procedures, and other documents cited herein, including priority documents, are fully incorporated by reference to the extent such disclosure is not inconsistent and for all jurisdictions in which such incorporation is permitted.

While the illustrative forms disclosed herein have been described with particularity, it will be understood that various other modifications will be apparent to and can be readily made by those skilled in the art without departing from the spirit and scope of the disclosure. Accordingly, it is not intended that the scope of the claims appended hereto be limited to the examples and descriptions set forth herein but rather that the claims be construed as encompassing all the features of patentable novelty which reside herein, including all features which would be treated as equivalents thereof by those skilled in the art to which this disclosure pertains.

When numerical lower limits and numerical upper limits are listed herein, ranges from any lower limit to any upper limit are contemplated.

## Claims

1. A coextrusion die for producing a multilayer film or sheet of thermoplastic materials, comprising:
(a) a die outlet through which a layered melt stream of the thermoplastic materials is extruded as a multilayer film or sheet,
(b) a first die section for producing a core layer, said first die section having a flat manifold, said flat manifold having a feed entrance and a pressure manifold in communication with said slotted die outlet;
(c) a second die section for producing a first skin layer, said second die section having a cross flow manifold, said cross flow manifold having a flow path wherein a portion of a melt stream of the thermoplastic material traverses said second die section's length more than once, said cross flow manifold having a feed entrance and a pressure manifold in communication with said slotted die outlet; and
(d) a third die section for producing a second skin layer, said third die section having a cross flow manifold, said cross flow manifold having a flow path wherein a portion of a melt stream of the thermoplastic material traverses said third die section's length more than once, said cross flow manifold having a feed entrance and a pressure manifold in communication with said slotted die outlet.

2. The coextrusion die of claim 1, wherein said flat manifold of said first die section is a coat hanger manifold, a fish tail manifold, or a T-type manifold.

3. The coextrusion die of claim 2, wherein said flat manifold is a coat hanger manifold, wherein said feed entrance is positioned at an apex thereof.

4. The coextrusion die of claim 3, wherein said pressure manifold of said first die section has a midpoint having a first cross sectional area and transverse ends having a second cross sectional area, said second cross sectional area greater than said first cross sectional area of said pressure manifold.

5. The coextrusion die of claim 1, wherein said die outlet is a slotted die outlet which comprises a first die lip and a second die lip, said first die lip comprising a flexible lip bar having actuatable means located along a length thereof.

6. The coextrusion die of claim 5, wherein said actuatable means comprises a plurality of individual lip bolts, each of said lip bolts effective for varying the width of said slotted die outlet.

7. The coextrusion die of claim 1, further comprising a skin layer feedblock for dividing a flow of skin layer thermoplastic material into a first flow and a second flow, the first flow feeding said feed entrance of said second die section for producing a first skin layer and the second flow feeding said feed entrance of said third die section for producing a second skin layer.

8. The coextrusion die of claim 1, wherein said cross flow manifold of said second die section and said cross flow manifold of said third die section each have a flow path wherein a portion of a melt stream of the thermoplastic material traverses said second die section's length and said third die section's length, respectively, at least twice.

9. The coextrusion die of claim 1, wherein said cross flow manifold of said second die section and said cross flow manifold of said third die section each have a flow path wherein a portion of a melt stream of the thermoplastic material traverses said second die section's length and said third die section's length, respectively, at least 2.5 times.

10. The coextrusion die of claim 2, wherein said cross flow manifold of said second die section and said cross flow manifold of said third die section each have a flow path of a length sufficient to substantially eliminate the shape memory characteristics of the thermoplastic material.
